# EUROPÄISCHE PATENTSCHRIFT

(11) **EP 3 010 786 B1**
(45) Veröffentlichungstag und Bekanntmachung des Hinweises auf die Patenterteilung: **23.08.2017**
(21) Anmeldenummer: 14724765.4
(22) Anmeldetag: 19.05.2014
(51) Int. Cl.: B62D 15/02, B60T 7/22, B60W 30/09, G08G 1/16, B60T 8/1755, B60W 10/184, B60W 10/20, B60W 50/00

(54) **AUSWEICH- UND BREMSASSISTENT FÜR KRAFTFAHRZEUGE**
AVOIDANCE AND BRAKING ASSISTANCE FOR VEHICLE
ASSISTANCE A L'EVITEMENT ET AU FREINAGE POUR VEHICULE

(30) Priorität: 20.06.2013 DE 102013211643
(43) Veröffentlichungstag der Anmeldung: 27.04.2016
(73) Patentinhaber: Robert Bosch GmbH, 70442 Stuttgart (DE)
(72) Erfinder: BRAEUCHLE, Christian, 74855 Hassmersheim - Hochhausen (DE); FLEHMIG, Folko, 70192 Stuttgart (DE)
(86) Internationale Anmeldenummer: PCT/EP2014/060240
(87) Internationale Veröffentlichungsnummer: WO 2014/202309

(56) Entgegenhaltungen:
- EP-A1- 1 300 275
- JP-A- 2009 096 349
- US-A1- 2010 063 736
- US-A1- 2011 082 623
- US-A1- 2012 323 477
- US-A1- 2013 030 651

## Beschreibung

Die Erfindung betrifft einen Ausweich- und Bremsassistenten für Kraftfahrzeuge, mit einem sensorischen System zur Erfassung des Verkehrsumfelds des Fahrzeugs, einem aktorischen System für Eingriffe in ein Lenkungssystem und ein Bremssystem des Fahrzeugs, und mit einer elektronischen Steuereinrichtung, in der eine Notausweichfunktion implementiert ist, die anhand der vom sensorischen System gelieferten Daten prüft, ob ein Notausweichmanöver erforderlich ist, und dann über das aktorische System auf die Dynamik des Fahrzeugs einwirkt, um den Fahrzeugführer bei der Einleitung und/oder Ausführung des Notausweichmanövers zu unterstützen.

In Fahrzeugen der neueren Generationen sind Assistenzfunktionen verfügbar, die aufgrund von Umfeldsensorik wie Radar oder Videokamera die Gefahrensituation einschätzen und, wenn eine akute Kollisionsgefahr festgestellt wird, aktiv werden um Unfälle zu vermeiden oder zumindest die Unfallschwere zu mindern.

Einige dieser Assistenzfunktionen geben haptische Handlungsempfehlungen an den Fahrer. Es sind auch Assistenzfunktionen bekannt, die den Fahrer durch Eingriffe in die Fahrdynamik aktiv unterstützen, beispielsweise indem sie automatisch eine Notbremsung einleiten und/oder durch Eingriff in die Lenkung ein Ausweichmanöver einleiten. Beispielsweise beschreibt EP 1 926 646 B1 ein System, in dem eine Ausweichtrajektorie geplant und dann über einen Fahrdynamikregler umgesetzt wird. Aus Sicherheitsgründen müssen jedoch diese Ausweichfunktionen (Ausweichassistenten) jederzeit durch den Fahrer übersteuert werden können.

US 2011/082623 A1 ist als nächstliegender Stand der Technik nach dem Oberbegriff des Anspruchs 1 zu sehen und beschreibt einen Ausweich- und Bremsassistenten der eingangs genannten Art, der, wenn der Fahrer selbst in die Querdynamik des Fahrzeugs eingreift, zunächst nur den Lenkeingriff des Fahrers unterstützt.

US 2013/030651 A1 beschreibt ein System, bei dem der automatische Eingriff in die Querdynamik auch durch asymmetrisches Bremsen erreicht werden kann.

Aufgabe der Erfindung ist es, einen Ausweich- und Bremsassistenten zu schaffen, mit dem sich ein Ausweichmanöver sicherer durchführen lässt.

Diese Aufgabe wird dadurch gelöst, dass die Notausweichfunktion in einer ersten Phase eines Ausweichmanövers jedenfalls dann, wenn der Fahrer nicht selbst in die Querdynamik eingreift, ausschließlich in die Querdynamik eingreift und erst nach dieser Phase entscheidet, ob auch ein Eingriff in die Längsdynamik stattfindet.

Die Erfindung trägt dem Umstand Rechnung, dass viele Kraftfahrzeugführer bei einer Notbremsung, ob sie nun von ihnen selbst oder vom Assistenzsystem eingeleitet wird, instinktiv versuchen, Querbewegungen des Fahrzeugs durch entsprechendes Gegenlenken zu unterdrücken, weil sie befürchten, dass das Fahrzeug außer Kontrolle gerät. Bei einem kombinierten Ausweich- und Bremsassistenten besteht deshalb die Gefahr, dass die planmäßige automatische Durchführung des Ausweichmanövers durch ein solches Gegenlenken des Fahrzeugführers erschwert oder vereitelt wird. Erfindungsgemäß erfolgt deshalb in einer ersten Phase ausschließlich ein Eingriff in die Querdynamik, ohne dass bereits eine Notbremsung eingeleitet wird. Dadurch wird dem Fahrer signalisiert, dass der Ausweichassistent aktiv ist und ein Ausweichmanöver mit Eingriff in die Querdynamik vornimmt. In den meisten Fällen wird dann der Fahrzeugführer diesen automatisch eingeleiteten Eingriff akzeptieren oder sogar aktiv unterstützen, und er wird nicht mehr gegenlenken, wenn dann erforderlichenfalls etwas später auch ein Eingriff in die Längsdynamik, also ein Bremsvorgang stattfindet. Auf diese Weise lässt sich mit höherer Wahrscheinlichkeit erreichen, dass das Manöver insgesamt erfolgreich durchgeführt werden kann.

Vorteilhafte Weiterbildungen und Ausgestaltungen der Erfindung ergeben sich aus den Unteransprüchen.

Der Eingriff in die Querdynamik kann über die Fahrzeüglenkung erfolgen, beispielsweise über einen Aktor, der zusätzlich zu dem von Fahrer manuell ausgeübten Lenkdrehmoment ein weiteres Lenkdrehmoment auf die Lenkwelle ausübt, oder auch über eine sogenannte Aktivlenkanlage, die aktiv einen Lenkwinkel einstellt, der sich dann mit dem vom Fahrer manuell über das Lenkrad eingestellten Lenkwinkel überlagert.

Alternativ oder zusätzlich kann der Eingriff in die Querdynamik auch über die Bremsanlage erfolgen, nämlich indem durch asymmetrisches Bremsen mindestens eines der linken und rechten Fahrzeugräder eine Querbewegung des Fahrzeugs hervorgerufen wird.

Im Regelfall wird auf die erste Phase des Ausweichmanövers eine zweite Phase folgen, in der die Notausweichfunktion sowohl in die Querdynamik als auch in die Längsdynamik des Fahrzeugs eingreift. Je nach Verlauf der ersten Phase sind jedoch auch Situationen denkbar, in denen die Notausweichfunktion erkennt, dass ein Eingriff in die Längsdynamik nicht mehr erforderlich ist und deshalb das Ausweichmanöver allein durch Eingriff in die Querdynamik zu Ende führt. Umgekehrt sind auch Situationen denkbar, in denen der Eingriff in die Querdynamik abgeschlossen oder abgebrochen wird bevor der Eingriff in die Längsdynamik beendet ist.

Ergänzend sind selbstverständlich auch Hinweise an den Fahrzeugführer vor, während oder nach Abschluss des automatisch eingeleiteten Manövers möglich.

Im folgenden wird ein Ausführungsbeispiel anhand der Zeichnung näher erläutert.

Es zeigen:
- Fig. 1: ein Blockdiagramm eines erfindungsgemäßen Ausweichassistenten;
- Fig. 2 (A) und (B): Diagramme einer Ausweichtrajektorie und eines Geschwindigkeitsprofils für ein Beispiel eines Notausweichmanövers;
- Fig. 3 (A) und (B): Diagramme einer Ausweichtrajektorie und eines Geschwindigkeitsprofils für ein anderes Beispiel eines Notausweichmanövers;
- Fig. 4 (A) und (B): Diagramme einer Ausweichtrajektorie und eines Geschwindigkeitsprofils für ein abgebrochenes Notausweichmanöver; und
- Fig. 5: ein Flussdiagramm zur Erläuterung der Erfindung.

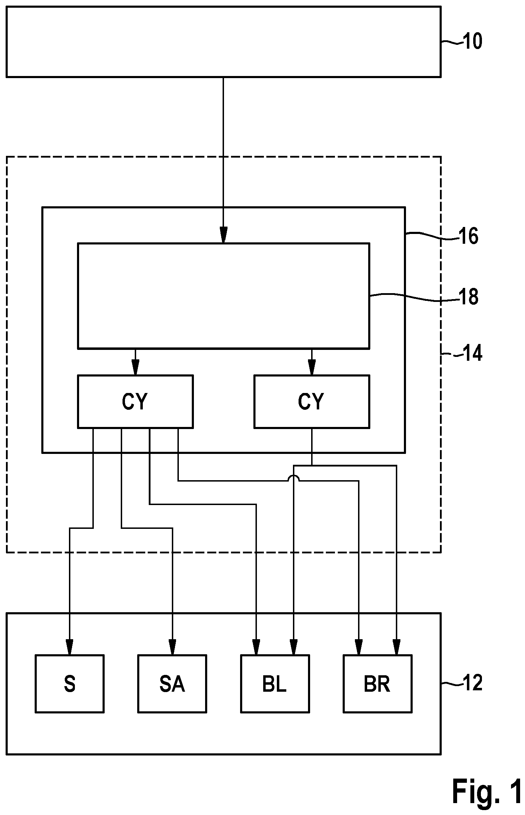

Der in Fig. 1 als Blockdiagramm dargestellte Ausweichassistent umfasst ein sensorisches System 10, ein aktorisches System 12 und eine elektronische Steuereinrichtung 14, beispielsweise in der Form eines oder mehrerer Mikroprozessoren, die die vom sensorischen System 10 gelieferten Daten auswertet und verarbeitet und als Ergebnis dieser Verarbeitung Befehle an das aktorische System 12 ausgibt.

Das sensorische System 10 umfasst einerseits Sensorkomponenten, die den dynamischen Zustand des eigenen Fahrzeugs erfassen, also beispielsweise dessen Geschwindigkeit, Beschleunigung, Lenkwinkelgeschwindigkeit, Giergeschwindigkeit, Getriebezustand, Schlupf der Antriebsräder und dergleichen. Weiterhin umfasst das sensorische System 10 Sensorkomponenten, die das Umfeld des Fahrzeugs umfassen, beispielsweise Videosysteme mit zugehöriger elektronischer Bildverarbeitung, Radarsensoren, Ultraschallsensoren und dergleichen. Im weiteren Sinne können zum sensorischen System 10 auch Informationsquellen gerechnet werden, die in anderer Weise Informationen über das Verkehrsumfeld und insbesondere die Verkehrsinfrastruktur bereitstellen, beispielsweise Daten eines Navigationssystems oder gespeicherter Karten.

In der Steuereinrichtung 14 ist eine Notausweichfunktion 16 implementiert, die in bekannter Weise anhand der vom sensorischen System 10 gelieferten Daten die aktuelle Verkehrssituation bewertet und eine Wahrscheinlichkeit für den Eintritt einer Kollision mit einem anderen Fahrzeug oder einem sonstigen Hindernis berechnet. Wenn diese Wahrscheinlichkeit einen bestimmten Wert erreicht, gibt die Notausweichfunktion 16 Befehle an das aktorische System 12 aus, um ein Notausweichmanöver auszulösen, z. B. zunächst durch entsprechende Hinweise an den Fahrer, notfalls aber auch durch aktiven Eingriff in die Dynamik des Fahrzeugs.

Das aktorische System 12 umfasst einen Lenkungsaktuator S, der beispielsweise ein Lenkdrehmoment erzeugt, das zusätzlich zu dem vom Fahrzeugführer ausgeübten Lenkdrehmoment auf die Lenkwelle des Fahrzeugs wirkt. Da das vom Lenkungsaktuator ausgeübte Drehmoment in beiden Richtungen durch Grenzwerte beschränkt ist, kann der Fahrer den vom aktorischen System 12 bewirkten Lenkeingriff übersteuern, indem er von Hand über das Lenkrad ein eigenes (gleichsinniges oder gegensinniges) Lenkdrehmoment ausübt.

Alternativ oder zusätzlich kann das aktorische System auch eine sogenannte Aktivlenkung SA aufweisen, die unabhängig von der Stellung des Lenkrads einen Lenkwinkel einstellt. Als Lenkwinkel der Fahrzeugräder ergibt sich dann letztlich ein Winkel, der einer Überlagerung des vom aktorischen System 12 eingestellten Lenkwinkels und des vom Fahrzeugführer von Hand über das Lenkrad eingestellten Lenkwinkels entspricht. In diesem Fall kann der Fahrer also das aktorische System 12 übersteuern, indem er über das Lenkrad einen größeren oder kleineren Lenkwinkel oder gar einen Lenkwinkel in der entgegengesetzten Richtung einstellt.

Weiterhin weist das aktorische System 12 einen Bremsaktuator auf, der hier durch zwei Subsysteme repräsentiert wird, nämlich einen Bremsaktuator BL für das linke Vorder- und/oder Hinterrad des Fahrzeugs und einen Bremsaktuator BR für das rechte Vorder- und/oder Hinterrad.

Die Notausweichfunktion 16 gliedert sich funktionell in eine Planungsinstanz 18, einen Querdynamikregler CY und einen Längsdynamikregler CV. Wenn sich ein Notausweichmanöver als erforderlich erweist, berechnet die Planungsinstanz 18 anhand der vom sensorischen System 10 gelieferten Daten eine Soll-Ausweichtrajektorie und ein zugehöriges Soll-Geschwindigkeitsprofil. Der Querdynamikregler CY wirkt dann so auf das aktorische System 12 ein, dass das Fahrzeug möglichst auf der Soll-Ausweichtrajektorie gehalten wird, und der Längsdynamikregler CV wirkt so auf die Bremsanlage (und ggf. auch das Antriebssystem) des Fahrzeugs ein, dass möglichst das Soll-Geschwindigkeitsprofil eingehalten wird.

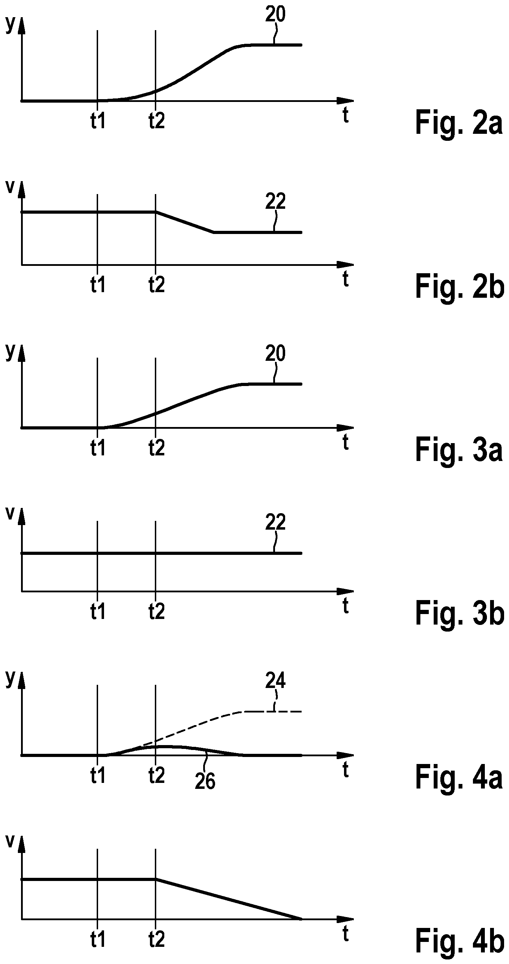

In Fig. 2 (A) wird eine Soll-Ausweichtrajektorie durch eine Kurve 20 beschrieben, die die Querposition y des Fahrzeugs als Funktion der Zeit t angibt. In Fig. 2 (B) wird das zugehörige Soll-Geschwindigkeitsprofil durch eine Kurve 22 repräsentiert, die die Geschwindigkeit v (Längsgeschwindigkeit) des Fahrzeugs als Funktion der Zeit t angibt.

In dem in Fig. 2 gezeigten Beispiel hat die Planungsinstanz 18 eine Soll-Trajektorie berechnet, auf der das Fahrzeug auf die linke Nebenspur ausweicht. Eine erste Phase des Ausweichmanövers beginnt zu einem Zeitpunkt t1 mit einem Eingriff in die Lenkung. Es erfolgt in dieser Phase aber noch kein Eingriff in die Längsdynamik, so dass die Geschwindigkeit v des Fahrzeugs vorerst noch konstant bleibt. Der Fahrzeugführer nimmt folglich nur einen Eingriff in die Querdynamik wahr und schließt daraus, dass der Ausweichassistent versucht, das Hindernis zu umfahren. In diesem Beispiel soll deshalb angenommen werden, dass der Fahrer den automatischen Eingriff zulässt und die Notausweichfunktion nicht übersteuert.

Erst zu einem späteren Zeitpunkt t2 setzt dann eine zweite Phase des Ausweichmanövers ein, in der, während der Eingriff in die Querdynamik fortgesetzt wird, auch ein Eingriff in die Längsdynamik in der Form eines Bremsvorgangs erfolgt, z. B. um die Unfallfolgen zu mildern, falls es trotz des eingeleiteten Ausweichmanövers zu einer Kollision kommen sollte. Dementsprechend nimmt die Geschwindigkeit v ab dem Zeitpunkt t2 ab. Schließlich wird das Ausweichmanöver mit einer Gegenlenkbewegung abgeschlossen, die z. B. dazu führt, dass das Fahrzeug seine Fahrt parallel zum ursprünglichen Kurs auf der Nebenspur fortsetzt. In Anbetracht der nun geringeren Geschwindigkeit v des Fahrzeugs kann die Gegenlenkbewegung mit kleinerem Kurvenradius erfolgen.

In dem hier gezeigten Beispiel wird der Eingriff in die Längsdynamik früher beendet als der Eingriff in die Querdynamik, so dass das Fahrzeug schon während der Gegenlenkbewegung wieder mit konstanter Geschwindigkeit fährt. Je nach Verkehrssituation kann es jedoch auch vorkommen, dass der Eingriff in die Querdynamik früher beendet wird als der Eingriff in die Längsdynamik.

Während des gesamten Ausweichmanövers überprüft die Planungsinstanz 18 anhand der vom sensorischen System 10 gelieferten Daten, ob die Ist-Dynamik der berechneten Soll-Dynamik entspricht oder ob es durch Eingriffe des Fahrzeugführers oder aufgrund anderer Faktoren zu einer Abweichung zwischen Ist- und Soll-Dynamik gekommen ist. Vorzugsweise bestimmt die Planungsinstanz 18 anhand der Ist-Dynamik auch den Zeitpunkt t2, an dem die zweite Phase des Ausweichmanövers beginnt. Ein Kriterium für die Einleitung der zweiten Phase - und damit des Eingriffs in die Längsdynamik - kann beispielsweise darin bestehen, dass der Lenkwinkel, die Lenkwinkelgeschwindigkeit, die Gierrate, der Gierwinkel, die Querposition y, der in Längsrichtung des Fahrzeugs zurückgelegte Weg, die Querbeschleunigung, die Raddrehzahlverhältnisse und/oder die seit dem Zeitpunkt t1 vergangene Zeit einen geeigneten Schwellenwert überschritten hat. Wahlweise kann auch eine Kombination aus mehreren solcher Kriterien benutzt werden, die dann mit unterschiedlichen Gewichten in die Entscheidung einfließen.

Fig. 3 illustriert ein Beispiel, in dem die Anfangsgeschwindigkeit v des Fahrzeugs kleiner ist, so dass das Hindernis auf einer Ausweichtrajektorie ohne Geschwindigkeitsänderung umfahren werden kann. Dementsprechend repräsentiert die Kurve 22 in Fig. 3 ein Geschwindigkeitsprofil, das einer konstanten Geschwindigkeit v entspricht. Sofern die Ist-Ausweichtrajektorie mit der Soll-Trajektorie übereinstimmt, entscheidet die Planungsinstanz 18 zum Zeitpunkt t2 (beispielsweise eine feste Zeitspanne nach dem Zeitpunkt t1) lediglich, dass kein Eingriff in die Längsdynamik erforderlich ist.

Fig. 4 illustriert dagegen ein Beispiel, bei dem der Fahrer durch aktives Gegenlenken das Ausweichmanöver verhindert. In Fig. 4 (A) wird die von der Planungsinstanz 18 berechnete Soll-Ausweichtrajektorie durch eine gestrichelt eingezeichnete Kurve 24 repräsentiert, während die Ist-Trajektorie durch eine Kurve 26 repräsentiert wird, die von der Kurve 24 abweicht. Zum Zeitpunkt t2 nimmt die Planungsinstanz 18 aufgrund der Abweichung zwischen Ist- und Soll-Trajektorie eine Neubewertung der Kollisionswahrscheinlichkeit vor und entscheidet, dass entgegen der ursprünglichen Planung doch ein Eingriff (bzw. ein stärkerer Eingriff) in die Längsdynamik erforderlich ist. Dementsprechend wird zum Zeitpunkt t2 eine Notbremsung ausgelöst. Gleichzeitig kann ggf. der Eingriff in die Querdynamik abgebrochen werden.

Ebenso sind auch Fallgestaltungen möglich, in denen sich ein ursprünglich geplantes Bremsmanöver zum Zeitpunkt t2 dann doch als unnötig erweist oder das ursprünglich berechnet Geschwindigkeitsprofil modifiziert werden muss.

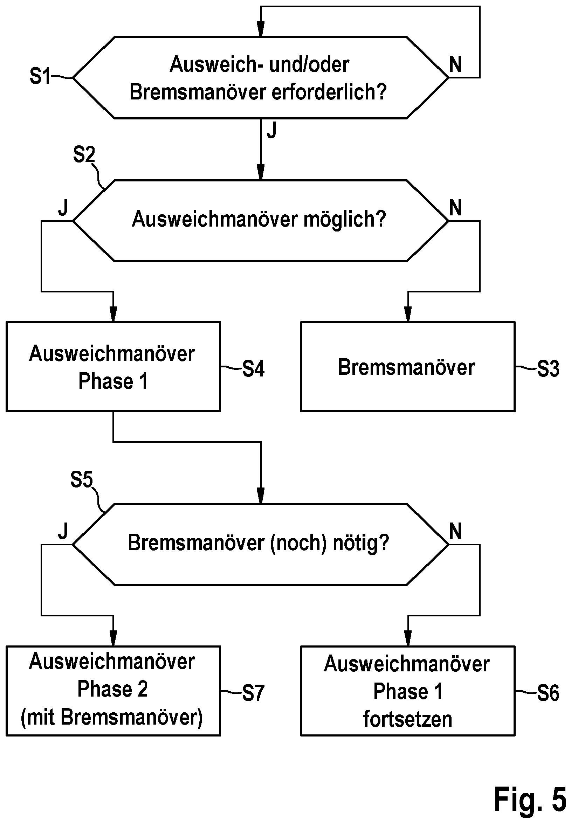

Die wesentlichen Funktionen des hier beschriebenen Ausweich- und Bremsassistenten sind in Fig. 5 in einem Flussdiagramm dargestellt.

In einem Schritt S1 wird von der Planungsinstanz 18 geprüft, ob akute Kollisionsgefahr besteht, d.h., ob ein Ausweichmanöver und/oder ein Bremsmanöver erforderlich ist oder nicht. Solange dies nicht der Fall ist (N) wird der Schritt S1 zyklisch wiederholt. Wenn Kollisionsgefahr besteht (J) wird in Schritt S2 anhand der Daten des sensorischen Systems (Kamera und/oder Radarsensor) geprüft, ob ein Ausweichmanöver möglich ist. Falls das nicht der Fall ist (N), beispielsweise weil die Nebenspur ebenfalls blockiert ist, wird unverzüglich (also schon zum Zeitpunkt t1) in Schritt S3 ein Notbremsmanöver eingeleitet. Wenn dagegen ein Ausweichmanöver mit Eingriff in die Querdynamik möglich ist, so wird in Schritt S4 zum Zeitpunkt t1 die erste Phase das Ausweichmanövers eingeleitet, d.h., es erfolgt ein Eingriff in die Querdynamik des Fahrzeugs aber noch kein Eingriff in die Längsdynamik.

Zu dem späteren Zeitpunkt t2 wird dann in Schritt S5 geprüft, ob im Rahmen des Ausweichmanövers oder anstelle desselben (falls das Ausweichmanöver abgebrochen wird) ein Eingriff in die Längsdynamik erforderlich ist. Wenn das nicht der Fall ist (N) wird in Schritt S6 das Ausweichmanöver allein mit dem Eingriff in die Querdynamik fortgesetzt, wie in dem in Fig. 3 illustrierten Beispielfall. Wenn dagegen auch ein Eingriff in die Längsdynamik erforderlich ist (J) beginnt mit Schritt S7 die zweite Phase des Ausweichmanövers mit kombiniertem Eingriff in die Querdynamik und die Längsdynamik. Falls der Fahrer einen Abbruch des Abbruchmanövers erzwingt (Fig. 4), wird der Eingriff in die Längsdynamik als Notbremsmanöver fortgesetzt.

Der Eingriff in die Querdynamik des Fahrzeugs muss zumindest in der ersten Phase des Ausweichmanövers nicht zwingend über den Lenkungsaktuator S oder die Aktivlenkanlage SA erfolgen. Wie Fig. 1 zeigt, kann der Querdynamikregler CY auch Befehle (mit unterschiedlichen Inhalten) an die Bremsaktuatoren BL und BR für die linke und rechte Fahrzeugseite übermitteln, um so durch asymmetrisches Bremsen in die Querdynamik einzugreifen. Der Längsdynamikregler CV übermittelt dagegen an die Bremsaktuatoren BL und BR für die beiden Fahrzeugseiten stets identische Befehle und bewirkt symmetrische Bremseingriffe ohne (absichtliche) Auswirkung auf die Querdynamik.

## Patentansprüche

1. Ausweich- und Bremsassistent für Kraftfahrzeuge, mit einem sensorischen System (10) zur Erfassung des Verkehrsumfelds des Fahrzeugs, einem aktorischen System (12) für Eingriffe in ein Lenkungssystem und ein Bremssystem des Fahrzeugs, und mit einer elektronischen Steuereinrichtung (14), in der eine Notausweichfunktion (16) implementiert ist, die anhand der vom sensorischen System (10) gelieferten Daten prüft, ob ein Notausweichmanöver erforderlich ist, und dann über das aktorische System (12) auf die Dynamik des Fahrzeugs einwirkt, um den Fahrzeugführer bei der Einleitung und/oder Ausführung des Notausweichmanövers zu unterstützen, **dadurch gekennzeichnet, dass** die Notausweichfunktion (16) in ersten Phase eines Ausweichmanövers jedenfalls dann, wenn der Fahrer nicht selbst in die Querdynamik eingreift, ausschließlich in die Querdynamik eingreift und erst nach dieser Phase entscheidet, ob auch ein Eingriff in die Längsdynamik stattfindet.

2. Ausweich- und Bremsassistent nach Anspruch 1, bei dem die Entscheidung, ob ein Eingriff in die Längsdynamik stattfindet, zu einem Zeitpunkt (t2) erfolgt, der von der Notausweichfunktion anhand eines Schwellenwertkriteriums bestimmt wird.

3. Ausweich- und Bremsassistent nach Anspruch 2, bei dem das Schwellenwertkriterium einen Schwellenwertvergleich für mindestens eine der folgenden Größen einschließt: Lenkwinkel des Fahrzeugs, Lenkwinkelgeschwindigkeit, Gierrate, Gierwinkel, Querversatz, Querbeschleunigung, Raddrehzahlverhältnis zwischen linken und rechten Rädern des Fahrzeugs, seit Beginn der ersten Phase zurückgelegter Weg, seit Beginn der ersten Phase vergangene Zeit.

4. Ausweich- und Bremsassistent nach einem der vorstehenden Ansprüche, bei dem der Eingriff in die Querdynamik zumindest in der ersten Phase des Ausweichmanövers ein asymmetrisches Bremsen der linken und rechten Räder des Fahrzeugs einschließt.

5. Ausweich- und Bremsassistent nach einem der vorstehenden Ansprüche, bei dem der Eingriff in die Querdynamik einen Eingriff über eine Aktivlenkanlage (SA) einschließt.

## Claims

1. Avoidance and braking assistant for motor vehicles, having a sensor system (10) for sensing traffic surroundings of the vehicle, an actuator system (12) for interventions into a steering system and a brake system of the vehicle, and having an electronic control device (14) in which an emergency avoidance function (16) is implemented, which emergency avoidance function (16) checks, on the basis of the data supplied by the sensor system (10), whether an emergency avoidance manoeuvre is necessary, and then acts on the dynamics of the vehicle via the actuator system (12), in order to assist the vehicle driver during the initiation and/or execution of the emergency avoidance manoeuvre, **characterized in that** the emergency avoidance function (16) engages, in the first phase of an avoidance manoeuvre, at any rate when the driver does not engage himself in the lateral dynamics, exclusively in the lateral dynamics and only after this phase decides whether an intervention in the longitudinal dynamics will take place as well.

2. Avoidance and braking assistant according to Claim 1, in which the decision as to whether an intervention takes place in the longitudinal dynamics is taken at a point in time (t2) which is determined by the emergency avoidance function on the basis of a threshold value criterion.

3. Avoidance and braking assistant according to Claim 2, in which the threshold value criterion includes a threshold value comparison for at least one of the following variables: steering angle of the vehicle, steering angle speed, yaw rate, yaw angle, lateral offset, lateral acceleration, wheel speed ratio between left-hand and right-hand wheels of the vehicle, distance travelled since the start of the first phase, time passed since the start of the first phase.

4. Avoidance and braking assistant according to one of the preceding claims, in which the intervention into the lateral dynamics includes, at least in the first phase of the avoidance manoeuvre, asymmetrical braking of the left-hand and right-hand wheels of the vehicle.

5. Avoidance and braking assistant according to one of the preceding claims, in which the intervention into the lateral dynamics includes an intervention via an active steering system (SA).

## Revendications

1. Assistant à l'évitement et au freinage pour des véhicules automobiles, avec un système sensoriel (10) de détection de l'environnement de trafic du véhicule, avec un système sensoriel (12) destiné à intervenir dans un système de direction et un système de freinage du véhicule et avec un dispositif de commande électronique (14) dans lequel une fonction d'évitement d'urgence (16) est implémentée, cette fonction vérifiant les données fournies à l'aide du système sensoriel (10) pour savoir si une manoeuvre d'évitement d'urgence est nécessaire puis agissant via le système d'actionneur (12) sur la dynamique du véhicule pour soutenir le conducteur du véhicule dans le début et/ou la réalisation de la manoeuvre d'évitement d'urgence, **caractérisé en ce que** la fonction d'évitement d'urgence (16) s'enclenche dans la première phase d'une manoeuvre d'évitement dès lors que le conducteur ne passe pas de lui-même dans la dynamique transversale, passe exclusivement dans la dynamique transversale puis décide après cette phase de la présence d'une intervention dans la dynamique longitudinale.

2. Assistant à l'évitement et au freinage selon la revendication 1, dans lequel la décision de si une intervention est effectuée dans la dynamique longitudinale se produit à un instant (t2) déterminé par la fonction d'évitement d'urgence à l'aide d'un critère de valeur seuil.

3. Assistant à l'évitement et au freinage selon la revendication 2, dans lequel le critère de valeur seuil inclut une comparaison de valeur seuil pour au moins une des grandeurs suivantes : angle de braquage du véhicule, vitesse angulaire de braquage, vitesse de lacet, angle de lacet, déport transversal, accélération transversale, rapport de nombres de tours des roues entre les roues gauches et droites du véhicule, distance parcourue depuis le début de la première phase, temps écoulé depuis le début de la première phase.

4. Assistant à l'évitement et au freinage selon l'une quelconque des revendications précédentes, dans lequel l'intervention dans la dynamique transversale inclut au moins dans la première phase de la manoeuvre d'évitement un freinage asymétrique des rouges gauches et droites du véhicule.

5. Assistant à l'évitement et au freinage selon l'une quelconque des revendications précédentes, dans lequel l'intervention dans la dynamique transversale inclut une intervention via une installation de braquage actif (SA) .
